# EUROPÄISCHE PATENTSCHRIFT

(11) **EP 1 028 260 B1**
(45) Veröffentlichungstag und Bekanntmachung des Hinweises auf die Patenterteilung: **02.01.2004**
(21) Anmeldenummer: 00102304.3
(22) Anmeldetag: 03.02.2000
(51) Int. Cl.: F16B 12/24

(54) **Verbindungselement**
Connecting element
Elément de connexion

(30) Priorität: 12.02.1999 DE 29902493 U
(43) Veröffentlichungstag der Anmeldung: 16.08.2000
(73) Patentinhaber: Hachtel, Friedrich, 73431 Aalen (DE); Hachtel, Steffen, 73650 Winterbach (DE)
(72) Erfinder: Hachtel, Friedrich, 73431 Aalen (DE); Hachtel, Steffen, 73650 Winterbach (DE)
(74) Vertreter: Möbus, Daniela, Dr.-Ing.

(56) Entgegenhaltungen:
- EP-A- 0 604 696
- FR-A- 2 257 809
- US-A- 3 883 258
- US-A- 5 033 904

## Beschreibung

Die Erfindung betrifft ein Verbindungselement, insbesondere für Holzverbindungen, nach dem Oberbegriff des Anspruchs 1.

Solche Verbindungselemente sind beispielsweise aus der EP-A-0 604 696, der FR-A-2 257 809, der US-A-5, 033, 904 und der US-A-3,883,258 bereits bekannt. Das Verbindungselement der US-A-5,033,904 weist dabei über seine gesamte Länge einen geringeren Durchmesser auf als die Bohrungen in den beiden zu verbindenden Bauteilen. Die Fixierung erfolgt mittels eines Klebers, der in den Zwischenraum zwischen dem Verbindungselement und den Bohrungen eingefüllt wird. Das Einfüllen des Klebers bedeutet jedoch einen zusätzlichen Arbeits- und Materialaufwand.

Die verbindungselemente der drei anderen oben erwähnten Druckschriften sind mit Endstücken versehen, die widerhakenartige Vorsprünge aufweisen. Die Herstellung dieser Verbindungselemente ist somit sehr aufwändig und teuer.

Die vorliegende Erfindung hat die Aufgabe, ein Verbindungselement, insbesondere für Holzverbindungen, zu schaffen, mit dem unterschiedliche Bohrungsdurchmesser in den beiden miteinander zu verbindenden Teilen ohne eine zusätzliche Verleimung ausgeglichen werden können und das einfach und kostengünstig in der Herstellung ist.

Die Erfindung löst die gestellte Aufgabe mit einem Verbindungselement mit den Merkmalen des Anspruchs 1.

Führt man nun ein erfindungsgemäßes Verbindungselement in die dafür vorgesehenen Bohrungen der zu verbindenden Teile ein, so wird der über den Umfang des Mittelstücks vorstehende Bereich des jeweiligen Endstücks in die Innenwand der Bohrung eingedrückt und/oder deformiert und an die Innenwand der Bohrung gepresst. Durch den damit erreichten Presssitz des Verbindungselements in der jeweiligen Bohrung der miteinander zu verbindenden Bauteile ist eine sichere kraftschlüssige Verbindung zwischen dem Verbindungselement und dem jeweiligen Bauteil auch bei Unterschieden im Bohrungsdurchmesser gewährleistet.

Die Endstücke können in radialer Richtung deformierbar sein, sodass die über das Mittelstück überstehenden Bereiche nach innen gedrückt und die dazwischenliegenden Bereiche an die Innenwand der Bohrungen gepresst werden und somit die Anpresskraft zwischen Verbindungselement und der Bohrung des zu verbindenden Teils senkrecht auf die gegeneinander gepressten Flächen wirkt und somit zu einer maximalen Reibung führt. Durch eine entsprechende Profilierung der zwischen den überstehenden Bereichen liegenden Abschnitte kann außerdem ein Formschluss zwischen dem Verbindungselement und den Bohrungen erzeugt werden.

Die Endstücke weisen erfindungsgemäß einen im Wesentlichen dreieckigen Querschnitt auf, wobei die Ecken der Endstücke seitlich über das Mittelstück herausstehen. Beim Einführen des Verbindungselements in die Bohrung des zu verbindenden Bauteils werden dann die Ecken des Endstücks zusammengedrückt, wodurch die Seiten des Endstücks gegen die Innenwand der Bohrung gedrückt werden, was zu einer kraftschlüssigen Verbindung zwischen Verbindungselement und dem zu verbindenden Teil führt.

Damit sich die Endstücke beim Einführen an die Form der Bohrung anpassen können, können sie jeweils eine Sackbohrung besitzen.

Damit über die Trennebene der beiden miteinander verbundenen Bauteile keine Feuchtigkeit in die Bohrungen eintreten kann, kann das Mittelstück in seiner Mitte einen umlaufenden Wulst aufweisen, der in der Trennebene angeordnet werden kann. Dieser umlaufende Wulst dichtet dann die Bohrungen nach innen ab.

Als weitere Maßnahme, um unterschiedliche Bohrungsdurchmesser und gegeneinander versetzte Bohrungen mit dem Verbindungselement ausgleichen zu können, kann die Längsachse des Mittelstücks seitlich versetzt sein zu den Längsachsen der beiden Endstücke.

Zwecks einer erhöhten Reibung des Verbindungselements in der Bohrung, kann das Verbindungselement mindestens bereichsweise eine raue Oberfläche aufweisen, die sich mit der Bohrungsinnenwand verzahnen kann.

Aus Gründen einer preiswerten Herstellung kann das Verbindungselement aus Kunststoff ausgeführt sein.

Nachfolgend wird ein Ausführungsbeispiel eines erf indungsgemäßen Verbindungselements anhand der beiliegenden Zeichnung näher erläutert.

Im Einzelnen zeigen:
- Fig. 1: einen zentralen Längsschnitt durch ein Verbindungselement;
- Fig. 2: einen Längsschnitt durch das Verbindungselement aus Fig. 1 im montierten Zustand;
- Fig. 3: eine vergrößerte Stirnansicht des Verbindungselements aus Fig. 1.

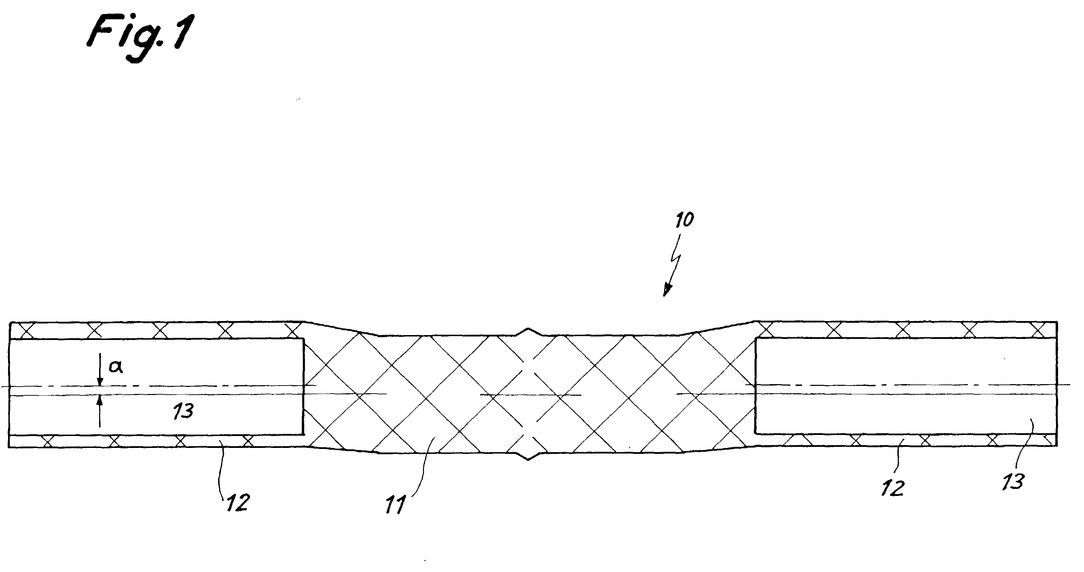

Fig. 1 zeigt ein Verbindungselement 10 mit einem Mittelstück 11 und zwei Endstücken 12. Die Längsachse des Mittelstücks 11 und der beiden Endstücke 12 weisen zueinander einen Versatz a auf. Durch diesen Versatz a können Unterschiede von Bohrungsdurchmessern oder auch nicht fluchtenden Bohrungen zweier miteinander zu verbindenden Teile ausgeglichen werden, da bei Einführung des Verbindungselements 10 in eine Bohrung eines Bauteils die Längsachse des Mittelstücks 11 an die Längsachse des Endstücks 12 herangedrückt wird, wodurch ein kraftschlüssiger Presssitz erzeugt wird. Selbstverständlich kann jedoch auch auf den seitlichen Versatz a verzichtet werden. Zur Erhöhung des Kraftschlusses kann die Oberfläche der Endstücke 12 wenigstens bereichsweise aufgeraut sein. In den Endstücken 12 sind außerdem Sackbohrungen 13 eingebracht, die eine Deformierung der Endstücke 12 ermöglichen, damit sich diese optimal an den Bohrungsdurchmesser anpassen können.

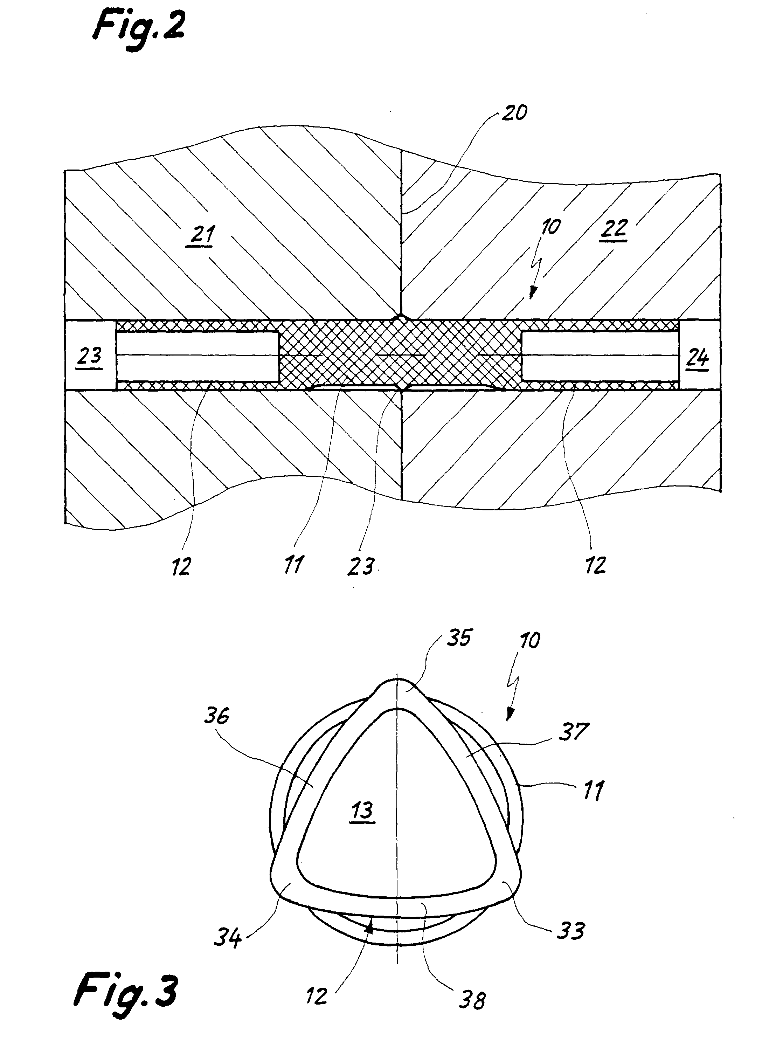

Fig. 2 zeigt das montierte Verbindungselement 10 aus Fig. 1 zur Verbindung zweier Teile 21, 22. Hierbei ist zu erkennen, dass der Versatz a aus Fig. 1 der Längsachse des Mittelstücks 11 und der Endstücke 12 nicht mehr wahrnehmbar ist. An der Trennebene 20 der beiden miteinander verbundenen Teile 21 und 22 dichtet ein Wulst 23 des Verbindungselements 10 die Bohrung 23 und 24 nach innen gegen Feuchtigkeit ab. Die Endstücke 12 sind gegen die Innenwände der Bohrungen 23, 24 gepresst und sorgen so für einen sicheren Halt.

Fig. 3 zeigt das Verbindungselement 10 mit dem Mittelstück 11 und einem Endstück 12 in der Stirnansicht. Hieraus ist ersichtlich, dass das Endstück 12 einen im Wesentlichen dreieckigen Querschnitt aufweist. Die Ecken 33 bis 35 stehen seitlich über das Mittelstück 11 heraus. Führt man das Endstück 12 in eine Bohrung eines Bauteils ein, so werden die Ecken 33 bis 35 nach innen gedrückt, wodurch die Seiten 36 bis 38 nach außen gedrückt werden und somit gegen die Innenwand der Bohrung pressen. Durch diese Pressung der Seiten 36 bis 38 wird eine kraftschlüssige Verbindung zwischen dem Verbindungselement 10 und der Bohrung 23, 24 hergestellt. Das Endstück 12 weist eine Sackbohrung 13 auf, damit es beim Einführen in die hier nicht näher dargestellte Bohrung besser deformierbar ist.

## Patentansprüche

1. Verbindungselement (10), insbesondere für Holzverbindungen, mit einem Mittelstück (11) und zwei Endstücken (12), wobei die beiden Endstücke (12) mit ihrem Umfang bereichsweise über den Umfang des Mittelstücks (11) vorstehen, **dadurch gekennzeichnet, dass** die Endstücke (12) einen im Wesentlichen dreieckigen Querschnitt aufweisen.

2. Verbindungselement (10) nach Anspruch 1, **dadurch gekennzeichnet, dass** die Endstücke (12) in radialer Richtung deformierbar sind.

3. Verbindungselement (10) nach Anspruch 1 oder 2, **dadurch gekennzeichnet, dass** die Ecken (33 bis 35) der Endstücke (12) seitlich über das Mittelstück (11) herausstehen.

4. Verbindungselement (10) nach einem der Ansprüche 1 bis 3, **dadurch gekennzeichnet, dass** die Endstücke (12) jeweils eine Sackbohrung (13) besitzen.

5. Verbindungselement (10) nach einem der Ansprüche 1 bis 4, **dadurch gekennzeichnet, dass** das Mittelstück (11) in seiner Mitte einen umlaufenden Wulst (22) aufweist.

6. Verbindungselement (10) nach einem der Ansprüche 1 bis 5, **dadurch gekennzeichnet, dass** die Längsachse des Mittelstücks (11) seitlich versetzt ist zu den Längsachsen der beiden Endstücke (12).

7. Verbindungselement nach einem der Ansprüche 1 bis 6, **dadurch gekennzeichnet, dass** das Verbindungselement mindestens bereichsweise eine raue Oberfläche aufweist.

8. Verbindungselement (10) nach einem der Ansprüche 1 bis 7, **dadurch gekennzeichnet, dass** es aus einem Kunststoff ausgeführt ist.

## Claims

1. A connecting element (10), in particular for joining together wooden components, said connecting element (10) having a middle piece (11) and two end pieces (12) and the two end pieces (12) projecting at some parts of their periphery beyond the periphery of the middle piece (11), **characterized in that** the end pieces (12) have a substantially triangular cross-section.

2. A connecting element (10) according to Claim 1, **characterized in that** the end pieces (12) are deformable in radial direction.

3. A connecting element (10) according to Claim 1 or 2, **characterized in that** the comers (33 to 35) of the end pieces (12) project sideways beyond the middle piece (11).

4. A connecting element (10) according to one of Claims 1 to 3, **characterized in that** the end pieces (12) each have a blind-end bore (13).

5. A connecting element (10) according to one of Claims 1 to 4, **characterized in that** a beading (22) extends around the midpoint of the middle piece (11).

6. A connecting element (10) according to one of Claims 1 to 5, **characterized in that** the longitudinal axis of the middle piece (11) is laterally offset relative to the longitudinal axes of the two end pieces (12).

7. A connecting element according to one of Claims 1 to 6, **characterized in that** at least in some areas the connecting element has a rough surface.

8. A connecting element (10) according to one of Claims 1 to 7, **characterized in that** it is made of a plastic material.

## Revendications

1. Elément de liaison (10), en particulier pour des liaisons de bois, comportant une pièce centrale (11) et deux embouts (12), par endroits les deux embouts (12) dépassant par leur périmètre le périmètre de la pièce centrale (11), **caractérisé en ce que** les embouts (12) présentent une section transversale sensiblement triangulaire.

2. Elément de liaison (10) selon la revendication 1, **caractérisé en ce que** les embouts (12) sont déformables dans la direction radiale.

3. Elément de liaison (10) selon la revendication 1 ou 2, **caractérisé en ce que** les angles (33 à 35) des embouts (12) dépassent latéralement de la pièce centrale (11).

4. Elément de liaison (10) selon l'une des revendications 1 à 3, **caractérisé en ce que** les embouts (12) possèdent chacun un trou borgne (13).

5. Elément de liaison (10) selon l'une des revendications 1 à 4, **caractérisé en ce que** la pièce centrale (11) présente en son milieu un bourrelet (22) périphérique.

6. Elément de liaison (10) selon l'une des revendications 1 à 5, **caractérisé en ce que** l'axe longitudinal de la pièce centrale (11) est décalé latéralement par rapport aux axes longitudinaux des deux embouts (12).

7. Elément de liaison (10) selon l'une des revendications 1 à 6, **caractérisé en ce que** l'élément de liaison présente une surface rugueuse au moins par endroits.

8. Elément de liaison (10) selon l'une des revendications 1 à 7, **caractérisé en ce qu'**il est réalisé dans une matière plastique.
